# EUROPÄISCHE PATENTSCHRIFT

(11) **EP 0 748 998 B1**
(45) Veröffentlichungstag und Bekanntmachung des Hinweises auf die Patenterteilung: **30.01.2002**
(21) Anmeldenummer: 96108749.1
(22) Anmeldetag: 31.05.1996
(51) Int. Cl.: F28F 27/00, F28C 1/14

(54) **Verfahren zur Steuerung des Luftmengenverhältnisses eines Nass-Trocken-Kühlturmes**
Process for contolling the air flow rate in a wet-dry cooling tower
Procédé de contrôle du rapport des débits d'air dans une tour de refroidissement humide-sèche

(30) Priorität: 16.06.1995 DE 19521814
(43) Veröffentlichungstag der Anmeldung: 18.12.1996
(73) Patentinhaber: Balcke-Dürr Energietechnik GmbH, 46049 Oberhausen (DE)
(72) Erfinder: Tesche, Walter, Dipl.-Ing., 40822 Mettmann (DE)
(74) Vertreter: Stenger, Watzke & Ring Patentanwälte

(56) Entgegenhaltungen:
- DE-A- 1 939 174
- DE-A- 2 123 220
- DE-A- 2 248 895
- FR-A- 2 270 539
- GB-A- 1 604 389
- STRENG: "Kombinierte Nass-/Trockenkühltürme in Zellenbauweise" BWK BRENNSTOFF WARME KRAFT., Bd. 47, Nr. 5, Mai 1995, DUSSELDORF DE, Seiten 218-224, XP000504408
- PATENT ABSTRACTS OF JAPAN vol. 18, no. 594 (M-1703), 14.November 1994 & JP 06 221793 A (ESUMETSUKU), 12.August 1994,

## Beschreibung

Die Erfindung betrifft ein Verfahren zur Steuerung des Luftmengenverhältnisses eines Naß-Trocken-Kühlturmes zwecks Einhaltung der Schwadenfreiheit.

Um einen Naß-Trocken-Kühlturm schwadenfrei betreiben zu können, muß dem mit Feuchtigkeit gesättigten Schwaden des Naßteils ein ausreichend großer Anteil warmer und trockener Luft aus dem Trockenteil beigemischt werden. Bei der üblichen Auslegung von Naß-Trocken-Kühltürmen, die in Deutschland unter Berücksichtigung einer über das Jahr gemittelten Lufttemperatur von ca. 10°C (Feuchtlufttemperatur ca. 8°C) bis hinab zu einer Umgebungslufttemperatur von - 5°C schwadenfrei arbeiten, sind die Anteile an Trockenluft und Naßluftschwaden etwa gleich groß. Mit steigender Umgebungslufttemperatur nimmt der für die Erzielung der Schwadenfreiheit erforderliche Anteil an trockener Luft jedoch deutlich ab, da ein Kühlturm als schwadenfrei definiert ist, wenn die Mischgerade zwischen dem Zustand der Umgebungsluft und der Abluft an der Kühlturmmündung die Sättigungslinie nicht überschreitet.

Um die Schwadenfreiheit eines Naß-Trocken-Kühlturmes zu garantieren, wird in der Praxis anstatt der Sättigungslinie unter Berücksichtigung eines Sicherheitszuschlages eine Grenzfeuchte definiert, die je nach erzielter Mischgüte der nassen und trockenen Abluft innerhalb des Kühlturmes anstatt auf der Sättigungskurve auf einer Kurve relativer Feuchtigkeit zwischen 95 % bis 98 % liegt.

Beim Betrieb der bekannten Naß-Trocken-Kühltürme ist der Anteil der für die Erzeugung des Kühlluftstromes zur Beaufschlagung des Trockenteils benötigten Energie etwa so groß wie der Energieanteil zur Erzeugung des für den Naßteil benötigten Kühlluftstromes, obwohl der Trockenteil nur mit etwa 20 % an der gesamten Kühlleistung des Kühlturmes beteiligt ist.

Der Erfindung liegt deshalb die Aufgabe zugrunde, ein Verfahren zur Steuerung des Luftmengenverhältnisses eines Naß-Trocken-Kühlturrnes zu schaffen, mit dem der Energieverbrauch für die Erzeugung des den Trockenteil beaufschllagenden Kühlluftstromes auf diejenige Energiemenge beschränkt wird, die im jeweiligen Betriebszustand gerade zur Einhaltung der Schwadenfreiheit benötigt wird.

Die **Lösung** dieser Aufgabenstellung durch die Erfindung wird durch Messung der Temperatur und relativen Luftfeuchte der Umgebungsluft und der Temperatur der Abluft sowohl des Trockenteils als auch des Naßteiles als Parameter des jeweiligen Betriebszustandes, durch Ermittlung des erforderlichen Verhältnisses der Luftmengenströme einerseits des Naßteils und andererseits des Trockenteils anhand dieser Parameter unter Vorgabe eines unter 100 % relativer Luftfeuchte liegenden Grenzwertes und durch Steuerung des ermittelten Luftmengenstromes durch den Trockenteil unter Beibehaltung des für die jeweilige Kühlleistung erforderlichen Luftmengenstromes durch den Naßteil erreicht.

Durch das erfindungsgemäße Verfahren wird sichergestellt, daß der den Trockenteil beaufschlagende Luftmengenstrom in Abhängigkeit vom jeweiligen Betriebszustand des Naß-Trocken-Kühlturmes nur jeweils so groß ist, wie er für die Einhaltung der Schwadenfreiheit benötigt wird, wobei in jedem Fall ein für die jeweilige Kühleistung des Kühlturms erforderlicher Luftmengenstrom durch den Naßteil aufrechterhalten wird. Um auch bei einer nicht 100 %igen Durchmischung von feuchtigkeitsbeladenem Schwaden und trockener Warmluft am Kühlturmaustritt und bei sich schnell ändernden Betriebszuständen sowie Verhältnissen der Umgebungsluft die Schwadenfreiheit beim Betrieb des Kühlturmes sicherzustellen, wird anstelle der Sättigungslinie eine zwischen 95 und 98 % liegende Grenzfeuchte beim erfindungsgemäßen Verfahren berücksichtigt, durch das der Gesamtwirkungsgrad des Kühlturmes und damit des Kraftwerkes insoweit verbessert wird, als Energieverluste für die Erzeugung eines für die Schwadenfreiheit nicht benötigten Luftmengenstromes durch den Trockenteil vermieden werden.

In der Literaturstelle STRENG "Kombinierte Naß-/Trockenkühltürme in Zellenbauweise", BWK Brennstoff Warme Kraft, Band 47, Nr. 5, Mai 1995, Seiten 218 - 224 und in der GB-A-1 604 389 wird zwar eine Steuerung der Luftmengenströme des Naßteils und des Trockenteils zur Erzielung der Schwadenfreiheit vorgeschlagen, es wird aber ausgeführt, daß diese Steuerung in Abhängigkeit des Außenluftzustandes und des Luftzustandes am Kühlturmaustritt erfolgen soll. Versuche haben jedoch gezeigt, daß Meßgeräte zur Bestimmung des Feuchtegehaltes in der Abluft am Kühlturmaustritt nicht nur mit großen Fehlern arbeiten, sondern nach kurzer Zeit funktionsunfähig waren. Auch wird in den genannten Druckschriften der prinzipielle Zusammenhang zwischen den Luftzuständen des Trocken- und des Naßteils beschrieben, insgesamt jedoch kein Hinweis gegeben, die Steuerung der Luftmengenströme während des Betriebes eines Kühlturms vorzunehmen, und zwar in Abhängigkeit von einfachen Temperaturmessungen sowohl der Abluft des Trockenteils als auch des Naßteils.

Sofern der Naß-Trocken-Kühlturm einen für den Naß- und Trockenteil gemeinsamen Fördermechanismus (Naturzug oder Zwangsbelüftung durch einen für Naß- und Trockenteil gemeinsamen Ventilator) aufweist, wird gemäß einem weiteren Merkmal der Erfindung vorgeschlagen, den Luftmengenstrom durch den Trockenteil durch Verändern des Strömungsquerschnittes zu steuern, beispielsweise mit Hilfe von Rolltoren oder Klappen. Hierdurch kann bei gleicher Zugleistung durch die Verringerung der Trockenluftmenge aufgrund des höheren Wirkungsgrades des Naßteiles die Kühlleistung insgesamt erhöht und damit die Kaltwassertemperatur gesenkt werden.

Sofern der Naß-Trocken-Kühlturm mit getrennten Ventilatoren für einerseits den Naßteil und andererseits den Trockenteil ausgestattet ist, wird gemäß einem weiteren Merkmal der Erfindung der Luftmengenstrom durch den Trockenteil durch Regelung der Drehzahl der zugehörigen Ventilatoren gesteuert. Bei gleicher Gesamtkühlleistung kann auf diese Weise der Energieverbrauch für die Trockenluftventilatoren gesenkt werden. Hierbei bleibt die Gesamtkühlleistung deswegen gleich, weil der Anteil der Naßkühlung im Verhältnis zur Trockenkühlung steigt.

Um den Energieaufwand für die Luftmengensteuerung zu begrenzen, wird mit der Erfindung schließlich vorgeschlagen, die Messungen periodisch in vorgebbaren Zeitabständen, beispielsweise alle fünf Minuten, durchzuführen.

Anhand der Zeichnung soll nachfolgend das erfindungsgemäße Verfahren erläutert werden; auf den Zeichnungen zeigt:
- Fig. 1: einen senkrechten Schnitt durch einen Naß-Trocken-Kühlturm mit einem für Naß- und Trockenteil gemeinsamen Ventilator,
- Fig. 2: einen senkrechten Schnitt durch einen Naß-Trocken-Kühlturm mit getrennten Ventilatoren für den Naß- und Trockenteil und
- Fig. 3: das Mollier-H-x-Diagramm zur Erläuterung des erfindungsgemäßen Verfahrens.

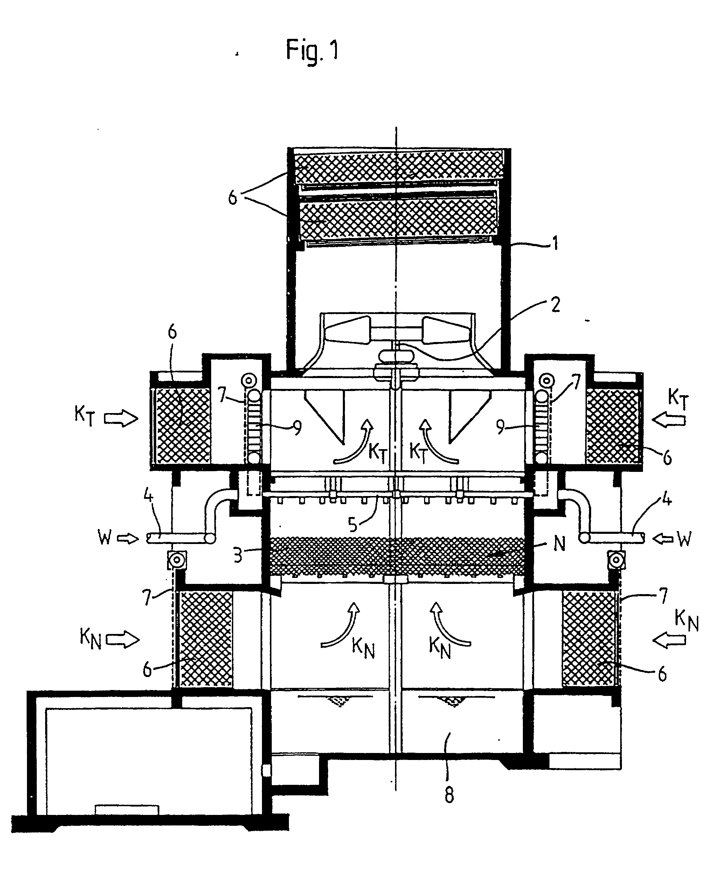

Das in Fig. 1 dargestellte erste Ausführungsbeispiel zeigt einen Naß-Trocken-Kühlturm mit einem kreiszylindrischen Kühlturmaustritt 1, in dem ein Ventilator 2 angeordnet ist, der den gesamten Zug des Naß-Trocken-Kühlturmes erzeugt. Dieser umfaßt einen Naßteil N in Form von Rieseleinbauten 3, denen das durch Zufuhrleitungen 4 zugeführte, zu kühlende Wasser W mittels einer Verteileinrichtung 5 von oben her aufgegeben wird und die von unten her im Gegenstrom zum Wasser mit einem Kühlluftstrom K_{N} beaufschlagt werden. Dieser dem Naßteil N zugeführte Kühlluftstrom K_{N} tritt durch mehrere seitliche Öffnungen, die jeweils mit einem Schalldämpfer 6 und einem Rolltor 7 versehen sind, seitlich in den Kühlturm ein. Das aus den Rieseleinbauten 3 abtropfende Wasser gelangt in eine Sammeltasse 8 am Boden des Kühlturms, aus der das gekühlte Wasser erneut dem Kraftwerkskreislauf zugeführt wird.

Oberhalb der Verteileinrichtung 5 für den Naßteil N sind den Trockenteil T bildende Wärmetauscher 9 in weiteren seitlichen Öffnungen des Kühlturmes angeordnet. Auch in diesen, die Wärmetauscher 9 enthaltenden Öffnungen sind Schalldämpfer 6 und Rolltore 7 angeordnet. Der durch diese Öffnungen vom Ventilator 2 angesaugte Kühlluftstrom K_{T} vermischt sich mit dem Kühlluftstrom K_{N} und wird am Ende des Kühlturmaustrittes 1 in dié Atmosphäre ausgetragen, wobei bei dem in Fig. 1 dargestellten Ausführungsbeispiel im Kühlturmaustritt 1 wiederum Schalldämpfer 6 und gegebenenfalls Tropfenfänger angeordnet sind.

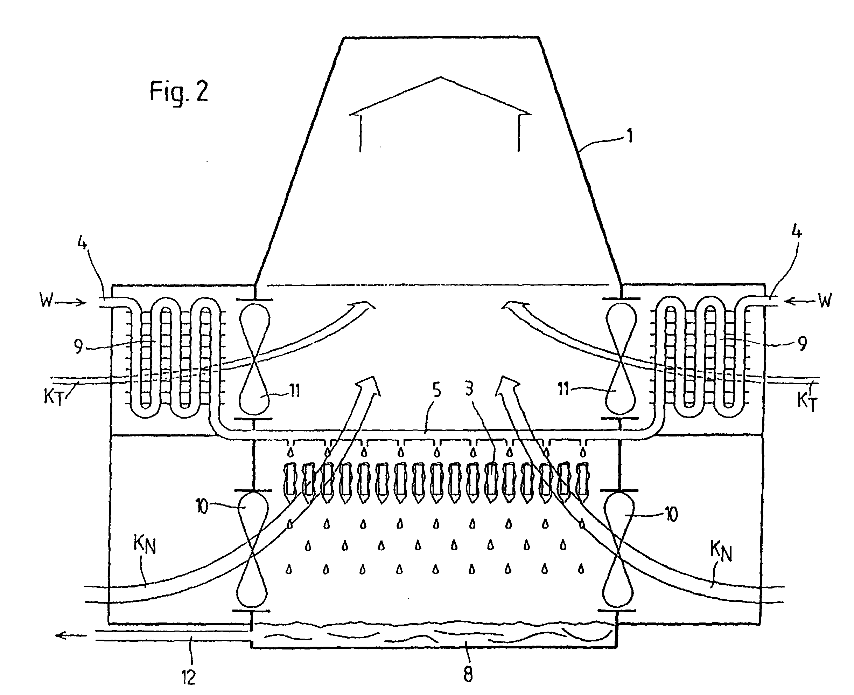

Die Fig. 2 zeigt schematisch ein Ausführungsbeispiel eines Naß-Trocken-Kühlturmes, bei dem sowohl dem durch Rieseleinbauten 3 dargestellten Naßteil N als auch dem durch Wärmetauscher 9 dargestellten Trockenteil T jeweils eigene Ventilatoren 10 bzw. 11 zugeordnet sind. Das zu kühlende Wasser W wird beim dargestellten Ausführungsbeispiel zuerst den Wärmetauschern 9 und anschließend der Verteileinrichtung 5 zugeführt, mit deren Hilfe es auf die Rieseleinbauten 3 von oben her aufgegeben wird und nach Kühlung durch den Kühlluftstrom K_{N} in die Sammeltasse 8 abtropft. Im linken unteren Teil der Fig. 2 ist eine Rückführleitung 12 zu erkennen.

Um unabhängig von der jeweiligen Gestaltung des Naß-Trocken-Kühlturmes bei allen Betriebszuständen eine Schwadenfreiheit zu gewährleisten, ist es erforderlich, daß die nach Durchmischung der Kühlluftströme K_{N} und K_{T} den Kühlturmaustritt 1 verlassende Kühlluft einen unterhalb 100 % relativer Luftfeuchte liegenden Wassergehalt hat.

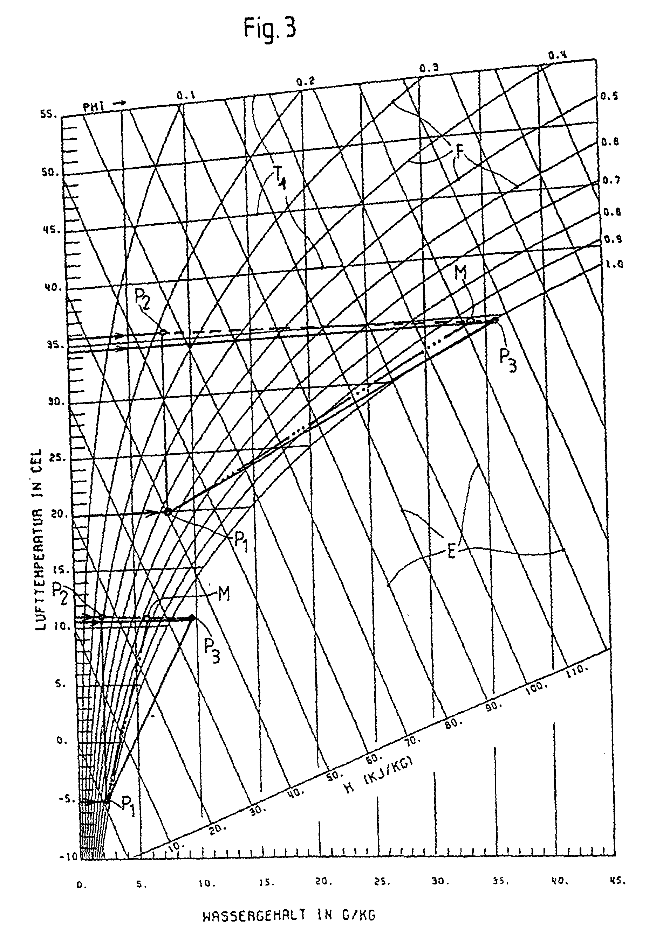

Im Mollier-H-x-Diagramm nach Fig. 3 ist auf der Abszisse der Wassergehalt in g/kg Luft und auf der Ordinate die Lufttemperatur in °C aufgetragen. Weiterhin enthält das Diagramm schräg und parallel zueinander verlaufende Linien E gleicher Enthalpie, etwa waagerecht verlaufende Linien T₁ gleicher Temperatur und eine Schar gekrümmter Linien F gleicher relativer Feuchtigkeit. Die Steuerung des Luftmengenverhältnisses eines Naß-Trocken-Kühlturmes zwecks Einhaltung der Schwadenfreiheit ist anhand zweier Beispiele im Diagramm nach Fig. 3 erläutert.

Beim ersten Beispiel beträgt die gemessene Temperatur der Umgebungsluft 20°C, die gemessene relative Luftfeuchtigkeit 55 %; im Diagramm ergibt sich der Punkt P₁. Da die den Trockenteil T verlassende Abluft den selben Wassergehalt, jedoch eine gemessene Temperatur von 35,8°C hat, ergibt sich weiterhin der Punkt P₂. Durch Messung der Temperatur der Abluft des Naßteils N mit 34,5°C ergibt sich schließlich der auf der Sättigungslinie liegende Punkt P₃. Nunmehr wird mit Hilfe einer vom Punkt P₁ ausgehenden Tangente an die Linie F gleicher relativer Feuchtigkeit mit einer Grenzfeuchte von 95 % ein Schnittpunkt M auf der Verbindungslinie der Punkte P₂ und P₃ errechnet. Die sich hiermit ergebenden Streckenverhältnisse P₂-M zu M-P₃ entsprechen dem Verhältnis des den Naßteil N verlassenden Kühlluftstromes K_{N} zu dem den Trockenteil T verlassenden Kühlluftstrom K_{T}, das zur Einhaltung der Schwadenfreiheit erforderlich ist.

Durch Regelung der Drehzahl der Ventilatoren 11 des Naß-Trocken-Kühlturmes nach Fig. 2 bzw. durch Verändern des Zuströmquerschnittes zu den Wärmetauschern 9 mit Hilfe der Rolltore 7 beim Naß-Trocken-Kühlturm nach Fig. 1 wird die Menge des Kühlluftstromes K_{T} dem jeweiligen Betriebszustand derart angepaßt, daß einerseits die Schwadenfreiheit sichergestellt ist und andererseits nur soviel Energie für die Erzeugung des Kühlluftstromes K_{T} aufgewendet wird, wie für die geforderte Schwadenfreiheit unter Beachtung einerseits der jeweiligen Kühlleistung und andererseits einer vorgegebenen Grenzfeuchte erforderlich ist.

Beim zweiten Ausführungsbeispiel im Diagramm nach Fig. 3 ergibt eine Messung der Umgebungsluft eine Temperatur von -5°C bei einer relativen Luftfeuchtigkeit von 85 %. Die Messung der Temperatur des den Trockenteil T verlassenden Kühlluftstromes K_{T} ergibt 11°C und damit bei gleichem Wassergehalt den Punkt P₂. Die nur geringfügig unterhalb 11°C liegende Temperatur des den Naßteil N verlassenden Kühlluftstromes K_{N} ergibt einen im Sättigungsbereich liegenden Punkt P₃.

Durch eine an die Grenzkurve von 95 % relativer Luftfeuchtigkeit ausgehend vom Punkt P₁ angelegte Tangente ergibt sich auf der Verbindungslinie zwischen den Punkten P₂ und P₃ wiederum ein Schnittpunkt M, der die Gerade zwischen den Punkten P₂ und P₃ in die Streckenabschnitt P₂-M und M-P₃ aufteilt. Das Streckenverhältnis P₂-M zu M-P₃ entspricht dem zur Erzielung der Schwadenfreiheit erforderlichen Verhältnis der Kühlluftmengen einerseits des Kühlluftstromes K_{N} und andererseits des Kühlluftstromes K_{T}.

Ein Vergleich der beiden in das Diagramm nach Fig. 3 eingezeichneten Beispiele zeigt, daß bei höheren Temperaturen der Anteil des den Trockenteil T durchströmenden Kühlluftstromes K_{T} am gesamten Kühlluftstrom erheblich kleiner (er liegt bei etwa 10 %) ist als bei niedrigen Temperaturen, bei denen das Verhältnis der beiden Kühlluftströme K_{T} zu K_{N} etwa 1:1 beträgt.

In Abhängigkeit vom jeweiligen Betriebszustand und den Umweltbedingungen läßt sich mit dem voranstehend geschilderten Verfahren die für die Erzeugung des Kühlluftstromes K_{T} erforderliche Energie auf dasjenige Maß reduzieren, das für die Erzielung der Schwadenfreiheit gerade notwendig ist.

### Bezugszeichenliste

- N: Naßteil
- T: Trockenteil
- W: Wasser
- K_{N}: Kühlluftstrom Naßteil
- K_{T}: Kühlluftstrom Trockenteil
- E: Linie gleicher Enthalpie
- F: Linie gleicher relativer Feuchtigkeit
- T₁: Linie gleicher Temperatur
- 1: Kühlturmaustritt
- 2: Ventilator
- 3: Rieseleinbauten
- 4: Zufuhrleitung
- 5: Verteileinrichtung
- 6: Schalldämpfer
- 7: Rolltor
- 8: Sammeltasse
- 9: Wärmetauscher
- 10: Ventilatornaßteil
- 11: Ventilatortrockenteil
- 12: Rückführleitung

## Patentansprüche

1. Verfahren zur Steuerung des Luftmengenverhältnisses eines Naß-Trocken-Kühlturmes zwecks Einhaltung der Schwadenfreiheit
durch Messung der Temperatur und relativen Luftfeuchte der Umgebungsluft und der Temperatur der Abluft sowohl des Trockenteils (T) als auch des Naßteils (N) als Parameter des jeweiligen Betriebszustandes,
durch Ermittlung des erforderlichen Verhältnisses der Luftmengenströme (K_{N}, K_{T}) einerseits des Naßteils (N) und andererseits des Trockenteils (T) anhand dieser Parameter unter Vorgabe eines unter 100 % relativer Luftfeuchte liegenden Grenzwertes
und durch Steuerung des ermittelten Luftmengenstromes (K_{T}) durch den Trockenteil (T) unter Beibehaltung des für die jeweilige Kühlleistung erforderlichen Luftmengenstromes (K_{N}) durch den Naßteil (N).

2. Verfahren nach Anspruch 1 mit einem für den Naß- und Trockenteil (N, T) gemeinsamen Fördermechanismus, **dadurch gekennzeichnet, daß** der Luftmengenstrom (K_{T}) durch den Trockenteil (T) durch Verändern des Strömungsquerschnittes gesteuert wird.

3. Verfahren nach Anspruch 1 mit getrennten Ventilatoren (10, 11) für einerseits den Naßteil (N) und andererseits den Trockenteil (T) des Kühlturmes, **dadurch gekennzeichnet, daß** der Luftmengenstrom (K_{T}) durch den Trockenteil (T) durch Regelung der Drehzahl der zugehörigen Ventilatoren (11) gesteuert wird.

4. Verfahren nach mindestens einem der Ansprüche 1 bis 3, **dadurch gekennzeichnet, daß** die Messungen periodisch in vorgebbaren Zeitabständen durchgeführt werden.

## Claims

1. Method for controlling the quantitative air ratio of a wet-dry cooling tower in order to maintain the freedom from fog,
by measuring the temperature and relative atmospheric humidity of the ambient air and the temperature of the outgoing air of both the dry part (T) and the wet part (N) as parameters of the corresponding operating state,
by determining the required ratio of the air mass flow rate (K_{N}, K_{T}) of firstly the wet part (N) and secondly the dry part (T) on the basis of these parameters, with a stipulated limit value which lies at less than 100% relative atmospheric humidity,
and by controlling the determined air mass flow rate (K_{T}) through the dry part (T) while maintaining the air mass flow rate (K_{N}) through the wet part (N) which is required for the appropriate cooling capacity.

2. Method according to Claim 1, having a delivery mechanism which is common to the wet and dry parts (N, T), **characterized in that** the air mass flow rate (K_{T}) through the dry part (T) is controlled by changing the cross section of flow.

3. Method according to Claim 1, having separate fans (10, 11) for the wet part (N), on the one hand, and the dry part (T), on the other hand, of the cooling tower, **characterized in that** the air mass flow rate (K_{T}) through the dry part (T) is controlled by regulating the rotational speed of the associated fans (11).

4. Method according to at least one of Claims 1 to 3, **characterized in that** the measurements are carried out periodically at predeterminable intervals.

## Revendications

1. Procédé pour réguler la proportion d'air d'un réfrigérant hybride afin de respecter l'obligation d'absence de dégagement
en mesurant la température et l'humidité relative de l'air ambiant et la température de l'air évacué aussi bien de la partie sèche (T) que de la partie humide (N) à titre de paramètres de l'état de fonctionnement rencontré,
en calculant le rapport nécessaire entre les débits d'airs (K_{N}, K_{T}), d'une part, de la partie humide (N) et, d'autre part, de la partie sèche (T) à l'aide de ces paramètres après avoir imposé une valeur limite inférieure à 100 % d'humidité relative de l'air,
et-en régulant le débit d'air calculé (K_{T}) traversant la partie sèche (T) tout en conservant le débit d'air (K_{N}) traversant la partie humide (N) requis pour la capacité de refroidissement voulue.

2. Procédé selon la revendication 1 avec un mécanisme de refoulement commun pour les parties humide et sèche (N, T), **caractérisé en ce que** le débit d'air (K_{T}) à travers la partie sèche (T) est régulé en modifiant la section d'écoulement.

3. Procédé selon la revendication 1 avec des ventilateurs séparés (10, 11) pour, d'une part, la partie humide (N) et, d'autre part, la partie sèche (T) du réfrigérant, **caractérisé en ce que** le débit d'air (K_{T}) à travers la partie sèche (T) est régulé en jouant sur la vitesse de rotation des ventilateurs correspondants (11).

4. Procédé selon au moins une des revendications 1 à 3, **caractérisé en ce que** les mesures sont réalisées périodiquement à intervalles de temps prédéfinis.
